# EUROPEAN PATENT APPLICATION

(11) **EP 4 287 311 A1**
(43) Date of publication of application: **06.12.2023**
(21) Application number: 21926363.9
(22) Date of filing: 03.12.2021
(51) Int. Cl.: H01M 4/36, H01M 4/38, H01M 4/62

(54) **SILICON-BASED NEGATIVE ELECTRODE MATERIAL AND PREPARATION METHOD THEREFOR, AND NEGATIVE ELECTRODE, BATTERY AND ELECTRONIC APPARATUS**

(30) Priority: 18.02.2021 CN 202110188225
(71) Applicant: GUANGDONG OPPO MOBILE TELECOMMUNICATIONS CORP., LTD., Dongguan, Guangdong 523860 (CN)
(72) Inventor: CHEN, Yilei, Dongguan, Guangdong 523860 (CN)
(74) Representative: Mewburn Ellis LLP
(86) International application number: PCT/CN2021/135421
(87) International publication number: WO 2022/174649

(57) **Abstract**

A silicon-based negative electrode material is provided in the present disclosure. The material includes a silicon-based core, a carbon layer coating the silicon-based core, and a phenyl-compound layer coating the carbon layer. A phenyl compound in the phenyl-compound layer has a structural formula illustrated in formula (I): 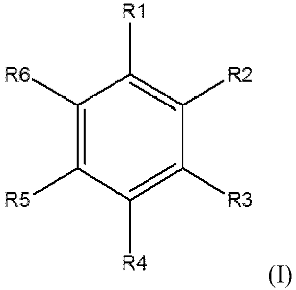 where R₁ has a carbon-carbon double bond or a carbon-carbon triple bond, and at least one of R₂, R₃, R₄, R₅, or R₆ has an organic acid group; or R₁ is an organic acid group having a carbon-carbon double bond or a carbon-carbon triple bond. The silicon based negative electrode material has a stable performance and high cycle efficiency, which is beneficial to widespread application thereof. A method for preparing a silicon-based negative electrode material, a negative electrode, a battery, and an electronic device are further provided in the present disclosure.

## Description

### TECHNICAL FIELD

This disclosure relates to the field of battery technology, and in particular to a silicon-based negative electrode material and a method for preparing the same, a negative electrode, a battery, and an electronic device.

### BACKGROUND

Existing silicon-based negative electrode materials have attracted wide attention due to their very high theoretical specific capacities. However, the silicon-based negative electrode material undergoes great volume changes during repeated charging and discharging, which may even cause the silicon-based negative electrode material to be crushed, and affect a performance of the silicon-based negative electrode material, thereby seriously limiting application of the silicon-based negative electrode material.

### SUMMARY

In view of this, a silicon-based negative electrode material is provided in the present disclosure.

In a first aspect, the silicon-based negative electrode material is provided in the present disclosure. The material includes a silicon-based core, a carbon layer coating the silicon-based core, and a phenyl-compound layer coating the carbon layer. A phenyl compound in the phenyl-compound layer has a structural formula illustrated in formula (I): 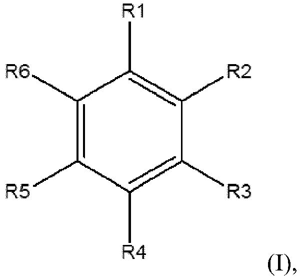 where R₁ has a carbon-carbon double bond or a carbon-carbon triple bond, and at least one of R₂, R₃, R₄, R₅, or R₆ has an organic acid group; or R₁ is an organic acid group having a carbon-carbon double bond or a carbon-carbon triple bond.

In a second aspect, a method for preparing a silicon-based negative electrode material is provided. The method includes the following. A carbon layer is formed on a surface of a silicon-based core. The silicon-based negative electrode material is obtained by forming a phenyl-compound layer on a surface of the carbon layer. The silicon-based negative electrode material includes the silicon-based core, the carbon layer coating the silicon-based core, and the phenyl-compound layer coating the carbon layer. A phenyl compound in the phenyl-compound layer has a structural formula illustrated in formula (I): 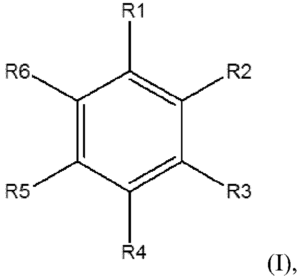 where R₁ has a carbon-carbon double bond or a carbon-carbon triple bond, and at least one of R₂, R₃, R₄, R₅, or R₆ has an organic acid group; or R₁ is an organic acid group having a carbon-carbon double bond or a carbon-carbon triple bond.

In a third aspect, a negative electrode is provided in the present disclosure. The negative electrode includes a negative-electrode current collector, and a negative-electrode material layer disposed on the negative-electrode current collector. The negative-electrode material layer includes the silicon-based negative electrode material in the first aspect or the silicon-based negative electrode material prepared by the method in the third aspect.

In a fourth aspect, a battery is provided in the present disclosure. The battery included a positive electrode, the negative electrode in the third aspect, and electrolyte.

In a fifth aspect, an electronic device is provided in the present disclosure. The electronic device includes the battery in the fourth aspect.

### BRIEF DESCRIPTION OF THE DRAWINGS

To describe technical solutions in implementations of the present disclosure more clearly, the following describes accompanying drawings required for describing implementations of the present disclosure.
FIG. 1 is a schematic structural diagram of a silicon-based negative electrode material in an implementation of the present disclosure.
FIG. 2 is a schematic flowchart of a method for preparing a silicon-based negative electrode material in an implementation of the present disclosure.
FIG. 3 is a schematic structural diagram of an electronic device in an implementation of the present disclosure.
FIG. 4 is an electron micrograph of a silicon-based negative electrode material in implementation 1.
FIG. 5 is a cycle performance diagram of a half-cell prepared by a silicon-based negative electrode material in implementation 1.

Reference signs:
silicon-based core-11, carbon layer-12, phenyl-compound layer-13, silicon-based negative electrode material-10, electronic device-100.

### DETAILED DESCRIPTION

The following are preferred implementations of the present disclosure. It should be noted that, for those of ordinary skill in the art, without departing from a concept of the present disclosure, several modifications and improvements can be made, and these modifications and improvements are also regarded to fall in the protection scope of the present disclosure.

Many different implementations or examples are provided in the following disclosure to implement different structures of the present disclosure. In order to simplify the present disclosure, certain components and arrangements of specific examples are described below. These components and arrangements are only examples and are not intended to limit the present disclosure. In addition, reference numerals/reference characters may be repeated in different examples in the present disclosure. This repeating is for the purpose of simplification and clarity and does not indicate relationships between different implementations and/or arrangements. Moreover, examples of various processes and material are provided in the present disclosure. However, it would be appreciated by those skilled in the art that other processes and/or material may also be applied.

A silicon-based negative electrode material is provided in an implementation of the present disclosure. The silicon-based negative electrode material includes a silicon-based core, a carbon layer coating the silicon-based core, and a phenyl-compound layer coating the carbon layer. A phenyl compound in the phenyl-compound layer has a structural formula as illustrated in formular (I): 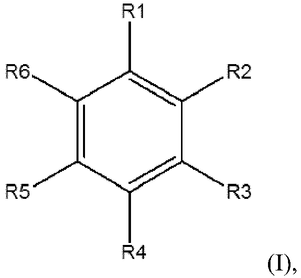 where R₁ has a carbon-carbon double bond or a carbon-carbon triple bond, and at least one of R₂, R₃, R₄, R₅, or R₆ has an organic acid group; or R₁ is an organic acid group having a carbon-carbon double bond or a carbon-carbon triple bond.

In an implementation, a thickness of the phenyl-compound layer ranges from 5nm to 200nm.

In an implementation, a weight of the phenyl-compound layer in the silicon-based negative electrode material accounts for 1 weight percent (wt%) -10wt%.

In an implementation, wherein a weight ratio of the phenyl-compound layer to the silicon-based core is (0.01-0.11):1.

In an implementation, R₁ has the carbon-carbon double bond or the carbon-carbon triple bond, and R₄ has the organic acid group.

In an implementation, the organic acid group is selected from a group consisting of a carboxylic acid group, a phosphoric acid group, a boronic acid group, and a sulfonic acid group.

In an implementation, the phenyl compound is selected from a group consisting of 4-vinylphenylacetic acid, 4-propenylbenzoic acid, 4-propenylbenzenesulfonic acid, 4-vinylbenzeneboronic acid, and 4-vinylbenzenephosphonic acid.

In an implementation, relative molecular mass of the phenyl compound is less than 1000.

In an implementation, a median particle size of the silicon-based core ranges from 1µm to 10µm. A weight of the silicon-based core in the silicon-based negative electrode material accounts for 80wt%-98 wt%.

In an implementation, the silicon-based core is selected from a group consisting of an elemental-silicon material, a silicon-alloy material, a silicon-oxygen material, and silicon-carbon material.

In an implementation, the silicon-based core includes a nanoscale elemental-silicon material. The nanoscale elemental-silicon material is selected from a group consisting of a silicon nanosphere, a silicon nanotube, and a silicon nanowire.

In an implementation, the silicon-carbon material is a silicon-carbon composite. A mass content of silicon in the silicon-carbon composite is greater than 25%.

In an implementation, a thickness of the carbon layer ranges from 5nm to 300nm. A weight of the carbon layer in the silicon-based negative electrode material accounts for 1wt%-10wt%. A weight ratio of the carbon layer to the silicon-based core is (0.01-0.125): 1.

In an implementation, the material of the carbon layer is selected from a group consisting of graphene, cracked carbon, a carbon nanotube, a carbon nanofiber, graphite, carbon black, and amorphous carbon.

A method for preparing a silicon-based negative electrode material is provided in an implementation of the present disclosure. The method includes the following. A carbon layer is formed on a surface of a silicon-based core. The silicon-based negative electrode material is obtained by forming a phenyl-compound layer on a surface of the carbon layer. The silicon-based negative electrode material includes the silicon-based core, the carbon layer coating the silicon-based core, and the phenyl-compound layer coating the carbon layer. A phenyl compound in the phenyl-compound layer has a structural formula illustrated in formula (I): 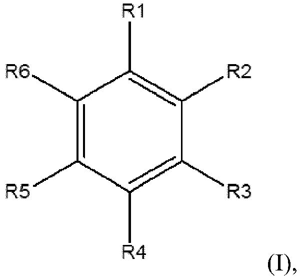 where R₁ has a carbon-carbon double bond or a carbon-carbon triple bond, and at least one of R₂, R₃, R₄, R₅, or R₆ has an organic acid group; or R₁ is an organic acid group having a carbon-carbon double bond or a carbon-carbon triple bond.

In an implementation, the carbon layer is formed on the surface of the silicon-based core as follows. The carbon layer is formed on the surface of the silicon-based core by solid-phase coating, liquid-phase coating, or vapor-phase coating.

In an implementation, the phenyl-compound layer is formed on the surface of the carbon layer as follows. The silicon-based core having the carbon layer is mixed with solution containing the phenyl compound. The phenyl-compound layer is formed on the surface of the carbon layer after filtering and drying.

A negative electrode is provided in an implementation of the present disclosure. The negative electrode includes a negative-electrode current collector, and a negative-electrode material layer disposed on the negative-electrode current collector. The negative-electrode material layer includes the above silicon-based negative electrode material or the silicon-based negative electrode material prepared by the above method for preparing the silicon-based negative electrode material.

A battery is provided in an implementation of the present disclosure. The battery includes a positive electrode, the above negative electrode, and electrolyte.

An electronic device is provided in an implementation of the present disclosure. The electronic device includes the above battery.

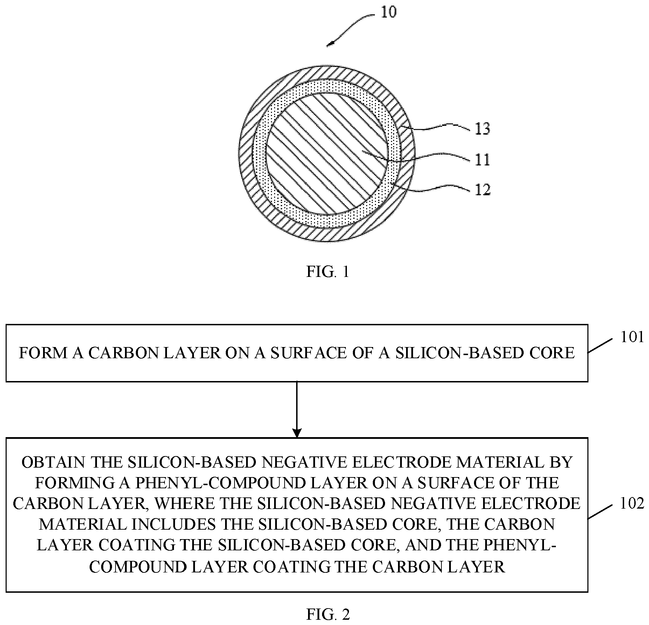

Referring to FIG. 1, FIG. 1 is a schematic structural diagram of a silicon-based negative electrode material in an implementation of the present disclosure. A silicon-based negative electrode material 10 includes a silicon-based core 11, a carbon layer 12 coating the silicon-based core 11, and a phenyl-compound layer 13 coating the carbon layer 12. A phenyl compound in the phenyl-compound layer 13 has a structural formula as illustrated in formula (I): 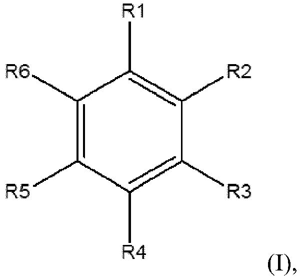 where R₁ has a carbon-carbon double bond or a carbon-carbon triple bond, and at least one of R₂, R₃, R₄, R₅, or R₆ has an organic acid group; or R₁ is an organic acid group having a carbon-carbon double bond or a carbon-carbon triple bond.

In the present disclosure, the silicon-based negative electrode material 10 may be applied to a battery, and a lithium-ion battery is taken as an example for description below. It can be understood that the silicon-based negative electrode material 10 may also be applied to other types of batteries, which is not limited herein and is also within the scope of protection of the present disclosure.

During initial charging and discharging of the lithium-ion battery, a silicon negative electrode material reacts with electrolyte, lithium ions, etc., at a solid-liquid interface, to form a passivation layer coating the silicon negative electrode material, which is a solid electrolyte interface (SEI) film. The SEI film is an insulator for electrons, but is an excellent conductor for lithium ions, and the lithium ions can be intercalated or deintercalated through the SEI film. The electrolyte and the lithium ions are consumed with formation of the SEI film, such that a charging and discharging effect of the battery is inevitably reduced. In the meanwhile, during charging and discharging, the volume of the silicon negative electrode material will expand, and the volume of the silicon negative electrode material will even expand to 3 times or more of the original volume, such that the SEI film is ruptured, and the electrolyte and the lithium ions are continuously consumed to form a new SEI film, which seriously affects a cycle performance. In addition, since silicon is a semiconductor material, a conductivity performance of the silicon negative electrode material is poor, thereby affecting the use of the silicon negative electrode material.

In the present disclosure, the phenyl compound in the phenyl-compound layer 13 is able to be decomposed prior to the electrolyte to form organic acid lithium with lithium ions, such that consumption of the electrolyte and the lithium ions is reduced, which is beneficial to improving the cycle performance; and the organic acid lithium has an excellent ion-conduction performance, such that a rate performance of the silicon-based negative electrode material 10 will not be affected with arrangement of the phenyl-compound layer 13, and impedance can be effectively reduced. In the meanwhile, the volume of the silicon-based core 11 continuously expands during the charging and discharging. However, since the phenyl compound in the phenyl-compound layer 13 has a double bond or a triple bond, during volume expansion of the silicon-based core 11 due to lithium intercalation, the phenyl compound is able to be polymerized to form macromolecules, and the macromolecules formed constantly cover the silicon-based core 11 expanded, such that a macromolecule layer having excellent elasticity and toughness is formed on a surface of the silicon-based core 11 expanded. The macromolecule layer has good compactness, and can be used as a constituent part of the SEI film, thereby further reducing participation of the electrolyte and the lithium ions in forming the SEI film; the macromolecule layer has good flexibility, which is beneficial to ensuring long-term stable existence of the SEI film; and the macromolecule layer adapts to the volume change of the silicon-based core 11, and can restrict and buffer the volume expansion of the silicon-based core 11, thereby ensuring stability of an overall structure of the silicon-based negative electrode material 10. In addition, in the present disclosure, the carbon layer 12 is adopted to coat the silicon-based core 11, which effectively improves an electron-conduction performance of the silicon-based negative electrode material 10 and is beneficial to application of the silicon-based negative electrode material 10.

In the present disclosure, the silicon-based core 11 is a core containing a silicon material. The silicon material is a negative electrode material having an ultra-high specific capacity, and is more than ten times of the capacity of a carbon negative electrode material, and the reserve of silicon is sufficient, which is beneficial to wide use. In an implementation of the present disclosure, the silicon-based core 11 is selected from a group consisting of an elemental-silicon material, a silicon-alloy material, a silicon-oxygen material, and a silicon-carbon material.

In an implementation of the present disclosure, the silicon-based core 11 includes a nanoscale elemental-silicon material. By selecting the nanoscale elemental-silicon material, a diffusion distance of lithium ions can be shortened, electrochemical activity of lithium-ion intercalation and deintercalation can be improved, and the volume change of the silicon-based core 11 can be reduced. In addition, silicon-based cores 11 formed by the nanoscale elemental-silicon material may have gaps therebetween, thereby effectively alleviate an influence of the volume expansion on the silicon-based negative electrode material 10. Further, the nanoscale elemental-silicon material is selected from a group consisting of a silicon nanosphere, a silicon nanotube, and a silicon nanowire. In a specific implementation, a material of the silicon-based core 11 includes a silicon nanosphere, and a particle size of the silicon nanosphere is less than 20nm. Specifically, the particle size of the silicon nanosphere may be, but is not limited to, 2nm, 3nm, 5nm, 7nm, 9nm, 10nm, 13nm, 15nm, 16nm, 17nm, or 18nm.

In another implementation of the present disclosure, the silicon-based core 11 includes a silicon-alloy material, and the silicon-alloy material includes a silicon-iron alloy, a silicon-copper alloy, a silicon-aluminum alloy, and a silicon-lithium alloy. Silicon alloy may be formed by silicon and a metal element, such that the volume change of the silicon-based core 11 is reduced, which is beneficial to keeping structural stability of the silicon-based negative electrode material 10 during lithium intercalation and deintercalation, thereby obtaining excellent cycle stability. In addition, the silicon alloy has higher conductivity, which is beneficial to improving an electrochemical performance of the silicon-based negative electrode material 10. The silicon-iron alloy and the silicon-copper alloy have no activity of lithium deintercalation and intercalation during the entire charging and discharging, and only serve to support a structure, alleviate volume expansion, and improve conductivity of the silicon-based negative electrode material 10. The silicon-aluminium alloy and the silicon-lithium alloy themselves have activity of lithium deintercalation and intercalation, and the silicon-aluminium alloy and the silicon-lithium alloy each have a different charging and discharging potential from silicon, such that the volume expansion of the silicon-based negative electrode material 10 occurs at different potentials, and mechanical internal stress generated thereby is alleviated, thereby improving the cycle stability of the entire silicon-based negative electrode material 10.

In another implementation of the present disclosure, the silicon-based core 11 includes a silicon-oxygen material. The silicon-oxygen material has a relatively small volume change, which can alleviate the volume expansion. In an implementation, a general formula of the silicon-oxygen material is SiOx, where 0<X<2. Specifically, the silicon-oxygen material includes silicon oxide. In another implementation, the silicon-oxygen material is doped with a metal. Specifically, the silicon-oxygen material is selected from a group consisting of a silicon-oxygen-lithium compound and a silicon-oxygen-magnesium compound. In the metal-doped silicon-oxygen material, an oxygen element will not react with a lithium ion during lithium intercalation, such that an irreversible loss of the lithium ion caused by the oxygen element during the initial charging and discharging is reduced, and initial coulombic efficiency of the material in the battery is improved. In addition, since the silicon-oxygen-lithium compound already contains a lithium element, a small amount of lithium ions need to be intercalated during the initial charging and discharging, and the volume expansion of the silicon-based core 11 is small, which is beneficial to improving stability of the silicon-based negative electrode material 10.

In an implementation of the present disclosure, the silicon-based core 11 includes a silicon-carbon material. In an implementation, the silicon-carbon material is a silicon-carbon composite, and a mass content of silicon in the silicon-carbon composite is greater than 25%, such that a high specific capacity of the silicon-based core 11 can be ensured, and the volume expansion of the silicon-based core 11 made of the silicon-carbon composite is relatively small, thereby ensuring structural stability of the silicon-based negative electrode material 10. Further, the mass content of silicon in the silicon-carbon composite is greater than 30%. Specifically, the mass content of silicon in the silicon-carbon composite may be, but is not limited to, 28%, 30%, 32%, 33%, 35%, 38%, 39%, 40%, 42%, 45%, 50%, 55%, or the like. In another implementation, the silicon-carbon material is amorphous silicon carbide. The amorphous silicon carbide has relatively small volume expansion during lithium intercalation and deintercalation, and has a high lithium-intercalation capacity.

In an implementation of the present disclosure, the weight of the silicon-based core 11 in the silicon-based negative electrode material 10 accounts for 80wt%-98wt%. Further, the weight of the silicon-based core 11 in the silicon-based negative electrode material 10 accounts for 82wt%-97wt%. Furthermore, the weight of the silicon-based core 11 in the silicon-based negative electrode material 10 accounts for 85wt%-95wt%. Specifically, the weight of the silicon-based core 11 in the silicon-based negative electrode material 10 may, but is not limited to, account for 81wt%, 83wt%, 86wt%, 89wt%, 90wt%, 91wt%, 92wt%, 94wt%, 96wt%, or 98wt%. The weight of the silicon-based core 11 in the silicon-based negative electrode material 10 accounts for the above value, such that the specific capacity of the silicon-based negative electrode material 10 is ensured, which is beneficial to the application of the silicon-based negative electrode material 10 in the battery.

In the present disclosure, the shape of the silicon-based core 11 is not limited, and may specifically be, but is not limited to, spherical, spherical-like. In an implementation of the present disclosure, the median particle size of the silicon-based core 11 ranges from 1µm to 10µm. Further, the median particle size of the silicon-based core 11 ranges from 2µm to 9µm. Furthermore, the median particle size of the silicon-based core 11 ranges from 3µm to 7µm. Specifically, the median particle size of the silicon-based core 11 may be, but is not limited to, 1µm, 1.5µm, 3.5µm, 4µm, 5µm, 6µm, 6.5µm, 7µm, 8µm, or 9µm. The silicon-based core 11 having the above median particle size can improve a lithium-intercalation capacity of the silicon-based negative electrode material 10 for the initial cycle.

In the present disclosure, the silicon-based core 11 is coated by the carbon layer 12, such that the conductivity performance of the silicon-based negative electrode material 10 is improved, mechanical strength of the silicon-based negative electrode material 10 is improved, which plays a certain buffering role in the volume expansion of the silicon-based core 11, also prevents direct contact between the silicon-based core 11 and the electrolyte, and keeps the stability of the structure.

In an implementation of the present disclosure, the material of the carbon layer 12 is selected from a group consisting of graphene, cracked carbon, a carbon nanotube, a carbon nanofiber, graphite, carbon black, and amorphous carbon. By adopting the above carbon material, the conductivity performance of the silicon-based negative electrode material 10 can be significantly improved, and a volume change of the silicon-based core 11 can also be buffered. In a specific implementation, the material of the carbon layer 12 includes graphene. The graphene has a two-dimensional honeycomb lattice structure, which can effectively promote effective transmission of electrons and rapid diffusion of lithium ions. The two-dimensional honeycomb lattice structure can effectively alleviate a volume change thereof and an external stress change, thereby ensuring the stability of the structure. In another specific implementation, the material of the carbon layer 12 includes amorphous carbon. The amorphous carbon has a relatively high reversible specific capacity, and has relatively good compatibility with the electrolyte. The amorphous carbon adopted not only plays a good volume buffering role, but also improves the conductivity performance of the silicon-based negative electrode material 10.

In an implementation of the present disclosure, the weight of the carbon layer 12 in the silicon-based negative electrode material 10 accounts for 1wt% to 10wt%. Further, the weight of the carbon layer 12 in the silicon-based negative electrode material 10 accounts for 1.5wt% to 9wt%. Furthermore, the weight of the carbon layer 12 in the silicon-based negative electrode material 10 accounts for 3wt% to 8wt%. Specifically, the weight of the carbon layer 12 in the silicon-based negative electrode material 10 may, but is not limited to, account for 1wt%, 2wt%, 3wt%, 4wt%, 5wt%, 6wt%, 7wt%, 8wt%, 9wt%, or 10wt%. The weight of the carbon layer 12 in the silicon-based negative electrode material 10 accounts for the above value, such that the conductivity performance of the silicon-based negative electrode material 10 is improved, and the volume expansion of the silicon-based core 11 is buffered to a certain extent. In the meanwhile, the carbon layer 12 is not excessively thick, thereby avoiding generating excessive stress on the silicon-based core 11, and ensuring the structural stability of the silicon-based core 11.

In an implementation of the present disclosure, the weight ratio of the carbon layer 12 to the silicon-based core 11 is (0.01-0.125):1. Further, the weight ratio of the carbon layer 12 to the silicon-based core 11 is (0.02-0.1):1. Furthermore, the weight ratio of the carbon layer 12 to the silicon-based core 11 is (0.04-0.09):1. Specifically, the weight ratio of the carbon layer 12 to the silicon-based core 11 may be, but is not limited to, 0.01:1, 0.02:1, 0.03:1, 0.045:1, 0.05:1, 0.06:1, 0.07:1, 0.08:1, 0.09:1, 0.1:1, or 0.12:1. Therefore, the carbon layer 12 and the silicon-based core 11 can cooperate with each other, to ensure the specific capacity and the conductivity performance of the silicon-based negative electrode material 10, and reduce an adverse effect caused by the volume expansion of the silicon-based core 11 as much as possible.

In an implementation of the present disclosure, the thickness of the carbon layer 12 ranges from 5nm to 300nm. Further, the thickness of the carbon layer 12 ranges from 20nm to 250nm. Furthermore, the thickness of the carbon layer 12 ranges from 50nm to 200nm. Specifically, the thickness of the carbon layer 12 may be, but is not limited to, 15nm, 25nm, 60nm, 85nm, 100nm, 115nm, 150nm, 180nm, 200nm, 230nm, 260nm, 275nm, or 290nm. The carbon layer 12 with the above thickness coats the surface of the silicon-based core 11, which can suppress a volume expansion effect of the silicon-based core 11 without affecting intercalation and deintercalation of lithium ions, and can fully exert the high specific capacity performance of the silicon-based negative electrode material 10.

In the present disclosure, the phenyl compound in the phenyl-compound layer 13 has the structural formula as illustrated in formular (I): 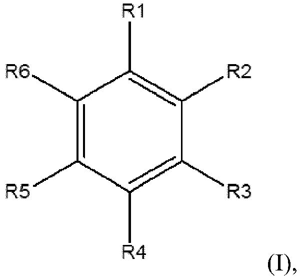 where R₁ has a carbon-carbon double bond or a carbon-carbon triple bond, and at least one of R₂, R₃, R₄, R₅, or R₆ has an organic acid group; or R₁ is an organic acid group having a carbon-carbon double bond or a carbon-carbon triple bond. The phenyl compound in the phenyl-compound layer 13 and lithium ions form the organic acid lithium. Since the phenyl compound has a double bond or a triple bond, the phenyl compound is able to be polymerized to form a macromolecule layer and coat a volume-expanded silicon-based core 11, so as to adapt to the volume change of the silicon-based core 11 and ensure the structural stability of the silicon-based negative electrode material 10. The macromolecule layer has a compact structure, which is beneficial to reducing participation of the electrolyte and the lithium ions in forming the SEI film. Therefore, with arrangement of the phenyl-compound layer 13, the cycle performance can be improved, the impedance of the battery can be effectively reduced, and the rate performance of the silicon-based negative electrode material 10 will not be affected. In the meanwhile, when the macromolecule layer is directly coated on the silicon-based core 11, during the volume expansion of the silicon-based core 11, the macromolecule layer is still subject to stress, which will cause the macromolecule layer to be ruptured, thereby affecting integrity of the SEI film on the surface of the silicon-based core 11. In this way, the electrolyte and the lithium ions need to continuously form the SEI film, thereby reducing the cycle performance. The phenyl compound adopted in the present disclosure can be polymerized during the volume expansion of the silicon-based core 11, and the macromolecules formed directly coats the surface of the silicon-based core 11 expanded, such that the polymers formed adapt to the volume change of the silicon-based core 11 and will not be ruptured. The macromolecule layer formed has flexibility, ensures the structural integrity of the SEI film, avoids the rupture of the SEI film during the volume change of the silicon-based core 11, reduces unnecessary consumption of the electrolyte and the lithium ions, and improves the cycle performance.

In an implementation of the present disclosure, in formula (I), R₁ has a carbon-carbon double bond or a carbon-carbon triple bond, and at least one of R₂, R₃, R₄, R₅, or R₆ has an organic acid group. In another implementation of the present disclosure, in formula (I), R₁ is an organic acid group having a carbon-carbon double bond or a carbon-carbon triple bond. In other words, R₁ is a hydrocarbyl organic acid group having a carbon-carbon double bond or a carbon-carbon triple bond. It can be understood that the phenyl compound can be selected from a range that satisfying any one of the above conditions. In an implementation of the present disclosure, in formula (I), R₁ has a carbon-carbon double bond or a carbon-carbon triple bond, and at least one of R₂, R₃, R₄, R₅, or R₆ has an organic acid group; and the substituent having no organic acid group in R₂, R₃, R₄, R₅, and R₆ is not particularly limited. For example, R₁ has a carbon-carbon double bond or a carbon-carbon triple bond, and R₂ has an organic acid group; and each of R₃, R₄, R₅, and R₆ is not particularly limited. In a specific implementation, the substituent having no organic acid group in R₂, R₃, R₄, R₅, and R₆ is at least one of H or C₁-C₆ alkyl, which is beneficial to ensuring the structural stability of the phenyl compound. In another specific implementation, in formula (I), R₁ has a carbon-carbon double bond or a carbon-carbon triple bond, and R₂ or R₆ has an organic acid group. In yet another specific implementation, in formula (I), R₁ has a carbon-carbon double bond or a carbon-carbon triple bond, R₃ or R₅ has an organic acid group. In yet another implementation, in formula (I), R₁ has a carbon-carbon double bond or a carbon-carbon triple bond, and R₄ has an organic acid group. The phenyl compound with para-position substitution has better structural stability, a carbon-carbon double bond or a carbon-carbon triple bond is meta-substituted with an organic acid group, and two substituents do not affect each other, which is more beneficial for the phenyl-compound layer 13 to play a role in the silicon-based negative electrode material 10. Further, R₂, R₃, R₅, and R₆ each are H. In a specific implementation, the phenyl compound is selected from a group consisting of 4-vinylphenylacetic acid, 4-propenylbenzoic acid, 4-propenylbenzenesulfonic acid, 4-vinylbenzeneboronic acid, and 4-vinylbenzenephosphonic acid. The phenyl-compound layer 13 formed by adopting the above phenyl compound has a stable performance, other side reactions are less likely to occur in the phenyl compound, and the phenyl compound can be easily prepared. In another implementation of the present disclosure, in formula (I), R₁ is an organic acid group having a carbon-carbon double bond or a carbon-carbon triple bond; and each of R₂, R₃, R₄, R₅, and R₆ is not particularly limited. In a specific implementation, R₂, R₃, R₄, R₅, and R₆ each are at least one of H or C₁-C₆ alkyl, which is beneficial to ensuring the structural stability of the phenyl compound. Further, R₂, R₃, R₄, R₅, and R₆ each are H, thereby further ensuring that other side reactions do not occur between phenyl compounds. It can be understood that R₁ is an organic acid group having a carbon-carbon double bond or a carbon-carbon triple bond, then R₁ may be an organic acid group having a carbon-carbon double bond, or an organic acid group having a carbon-carbon triple bond, or an organic acid group having a carbon-carbon double bond and a carbon-carbon triple bond, and all phenyl compounds satisfying the above conditions of R₁ are within the scope of protection of the present disclosure.

In an implementation of the present disclosure, the organic acid group is selected from a group consisting of a carboxylic acid group, a phosphoric acid group, a boronic acid group, and a sulfonic acid group. By adopting the above organic acid group, the phenyl compound is more easily bonded to lithium ions to form organic acid lithium. Specifically, during lithium intercalation, the phenyl compound reacts with the lithium ions to form a corresponding lithium salt, such as lithium carboxylate, lithium phosphate, lithium borate, lithium sulfonate, etc., which has an excellent ion-conduction performance, and is beneficial to reducing the impedance of the material.

In an implementation of the present disclosure, relative molecular mass of the phenyl compound is less than 1000. By arranging the phenyl compound with small molecules, the phenyl compound is more prone to cross-linking reaction, such that macromolecules with flexibility are generated, and the phenyl compound on the surface of the silicon-based core 11 has better stability. Further, the relative molecular mass of the phenyl compound is less than 900. Furthermore, the relative molecular mass of the phenyl compound is less than 800.

In an implementation of the present disclosure, the weight of the phenyl-compound layer 13 in the silicon-based negative electrode material 10 accounts for 1wt%-10wt%. Further, the weight of the phenyl-compound layer 13 in the silicon-based negative electrode material 10 accounts for 1.5wt%-9wt%. Furthermore, the weight of the phenyl-compound layer 13 in the silicon-based negative electrode material 10 accounts for 2wt%-8wt%. Specifically, the weight of the phenyl-compound layer 13 in the silicon-based negative electrode material 10 may, but is not limited to, account for 1wt%, 2wt%, 3wt%, 4wt%, 5wt%, 6wt%, 7wt%, 8wt%, 9wt%, or 10wt%. The weight of the phenyl-compound layer 13 in the silicon-based negative electrode material 10 accounts for the above value, such that not only can the unnecessary consumption of the electrolyte and the lithium ions be reduced, but also the macromolecule layer with an appropriate thickness can be formed. In addition, the polymer layer serves as a part of the SEI film, and plays a role in protecting the silicon-based core 11.

In an implementation of the present disclosure, the weight ratio of the phenyl-compound layer 13 to the silicon-based core 11 is (0.01-0.11):1. Further, the weight ratio of the phenyl-compound layer 13 to the silicon-based core 11 is (0.02-0.1):1. Furthermore, the weight ratio of the phenyl-compound layer 13 to the silicon-based core 11 is (0.03-0.09):1. Specifically, the weight ratio of the phenyl-compound layer 13 to the silicon-based core 11 may be, but is not limited to, 0.01:1, 0.02:1, 0.03:1, 0.045:1, 0.05:1, 0.06:1, 0.07:1, 0.08:1, 0.09:1, 0.1:1, or 0.11:1. Therefore, cross-linking can occur between the phenyl compounds in the phenyl-compound layer 13, and the macromolecule layer formed can coat the silicon-based core 11 expanded, such that the structural stability of the silicon-based negative electrode material 10 is ensured.

In an implementation of the present disclosure, the thickness of the phenyl-compound layer 13 ranges from 5nm to 200nm. Further, the thickness of the phenyl-compound layer 13 ranges from 20nm to 180nm. Furthermore, the thickness of the phenyl-compound layer 13 ranges from 50nm to 150nm. Specifically, the thickness of the phenyl-compound layer 13 may be, but is not limited to, 15nm, 25nm, 45nm, 60nm, 85nm, 100nm, 115nm, 130nm, 150nm, 160nm, 180nm, 190nm, or 200nm. The phenyl-compound layer 13 with the above thickness can form a proper amount of organic acid lithium, improve the ion-conduction performance of the silicon-based negative electrode material 10, facilitate the polymerization to form a proper amount of macromolecules, and can fully exert the high specific capacity performance of the silicon-based negative electrode material 10.

In an implementation of the present disclosure, the phenyl-compound layer 13 completely covers the carbon layer 12, such that the participation of the electrolyte and the lithium ions in formation of the SEI film is reduced as much as possible, and as many macromolecules generated by the crosslinking of the phenyl compound as possible become a part of the SEI film, thereby further improving the cycle efficiency.

A method for preparing a silicon-based negative electrode material 10 is further provided in the present disclosure. The silicon-based negative electrode material 10 in any one of the above implementations is prepared by the method. Referring to FIG. 2, FIG. 2 is a schematic flowchart of a method for preparing a silicon-based negative electrode material in an implementation of the present disclosure. The method includes the following.

Operation 101: a carbon layer is formed on a surface of a silicon-based core.

Operation 102: the silicon-based negative electrode material is obtained by forming a phenyl-compound layer on a surface of the carbon layer. The silicon-based negative electrode material includes the silicon-based core, the carbon layer coating the silicon-based core, and the phenyl-compound layer coating the carbon layer.

In an implementation of the present disclosure, a silicon-based material is provided, and the silicon-based core is obtained after grinding and screening. A volume expansion effect of the silicon-based core 11 can be alleviated by grinding and screening.

In an implementation of the present disclosure, the carbon layer 12 is formed on the surface of the silicon-based core 11 as follows. The carbon layer 12 is formed on the surface of the silicon-based core 11 by solid-phase coating, liquid-phase coating, or vapor-phase coating. In an implementation, a solid carbon source is mixed with the silicon-based core 11, and the silicon-based core 11 is coated by mechanical grinding. In another implementation, the silicon-based core 11 is dispersed in an organic solvent, a carbon precursor is added, and after spray drying and heat treatment, the carbon layer 12 is formed on the surface of the silicon-based core 11. In yet another implementation, the carbon layer 12 is formed on the surface of the silicon-based core 11 by chemical vapor deposition and/or in-situ growth. Specifically, specific process parameters of the solid-phase coating, the liquid-phase coating, or the vapor-phase coating can be selected according to actual needs. In a specific implementation, the silicon-based core 11 is placed into a vapor deposition furnace, and under protection of an inert gas, a temperature is raised to 850°C-950°C, and 500 standard cubic centimeters per minute (sccm)-2000sccm of ethylene is introduced; after the temperature is kept for 3h-8h, introduction of the ethylene is stopped; and after the temperature is reduced in the atmosphere of the inert gas, powder is pulverized and screened to obtain the silicon-based core 11 coated with the carbon layer 12. Further, the silicon-based core 11 is placed into the vapor deposition furnace, under the protection of the inert gas, the temperature is raised to 850°C-950°C, and 500sccm-1000sccm of the ethylene is introduced; after the temperature is kept for 3h-5h, the introduction of the ethylene is stopped; and after the temperature is reduced in the atmosphere of the inert gas, the powder is pulverized and screened to obtain the silicon-based core 11 coated with the carbon layer 12. Specifically, the temperature may be, but is not limited to, 850°C, 875°C, 900°C, 925°C, or 950°C; an introduction amount of the ethylene may be, but is not limited to, 500sccm, 800sccm, 1000sccm, 1300sccm, 1500sccm, 1600sccm, 1800sccm, or 1900sccm; time during which the temperature is kept may be, but is not limited to, 3h, 4h, 5h, 6h, 7h, or 8h; and the inert gas can be, but is not limited to, argon.

It can be understood that the material of the phenyl-compound layer 13 is selected as described above, and will not be repeated herein. In an implementation of the present disclosure, the phenyl-compound layer 13 is formed on the surface of the carbon layer 12 as follows. The silicon-based core 11 having the carbon layer 12 is mixed with solution containing the phenyl compound. The phenyl-compound layer 13 is formed on the surface of the carbon layer 12 after filtering and drying. In an implementation, solvent of the solution containing the phenyl compound is selected from a group consisting of methanol, ethanol, ethylene glycol, diethyl ether, isopropyl alcohol, acetone, toluene, chloroform, nitrogen (N), N-dimethylformamide, N-methylpyrrolidone, and tetrahydrofuran. In another implementation, the drying is performed at 60°C-130°C. The solvent is removed by the drying, such that the phenyl compound is coated on the surface of the carbon layer 12. In yet another implementation, the drying is also performed at -0.1MPa-0.1MPa and 60°C-160°C, such that the drying can be performed more rapidly. Further, the drying is also performed at -0.08MPa-0.1MPa and 80°C-150°C.

In an implementation of the present disclosure, the method further includes the following. The screening, drying, and demagnetization is performed on the silicon-based negative electrode material 10. Therefore, the quality of the silicon-based negative electrode material 10 is improved.

The method for preparing the silicon-based negative electrode material 10 provided in the present disclosure is simple and easy to operate, is more suitable for mass production, and has a high product yield.

A negative electrode is further provided in the present disclosure. The negative electrode includes a negative-electrode current collector, and a negative-electrode material layer disposed on the negative-electrode current collector. The negative-electrode material layer includes the silicon-based negative electrode material 10 in any one of the above implementations. The negative electrode prepared by using the above silicon-based negative electrode material 10 has good stability and good cycle performance, which is beneficial to application of the negative electrode in the battery. In the present disclosure, the negative-electrode current collector may be, but is not limited to, a copper foil, etc.

A battery is further provided in the present disclosure. The battery includes a positive electrode, the negative electrode in any one of the above implementations, and electrolyte. Specifically, the battery may be, but is not limited to, a lithium-ion battery, a potassium-ion battery, a sodium-ion battery, etc. The battery has a large specific capacity, a good rate, a good cycle performance, and a long service life.

In an implementation of the present disclosure, the positive electrode includes a positive-electrode current collector and a positive-electrode active-material layer disposed on the positive-electrode current collector. Specifically, the positive-electrode current collector may be, but is not limited to, an aluminum foil, etc. The material of the positive-electrode active-material layer is selected from a group consisting of a nickel-cobalt-manganese ternary material, a nickel-cobalt-aluminum ternary material, lithium cobalt oxide, lithium iron phosphate, and lithium manganese oxide.

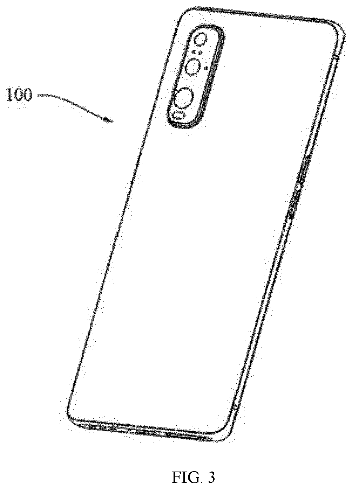

An electronic device 100 is further provided in the present disclosure. The electronic device 100 includes the battery in any one of the above implementations. It can be understood that the electronic device 100 may be, but is not limited to, a mobile phone, a tablet computer, a notebook computer, a watch, a moving picture experts group audio layer 3 (MP3), a moving picture experts group audio layer 4 (MP4), a global positioning system (GPS) navigator, a digital camera, etc. Referring to FIG. 3, FIG. 3 is a schematic structural diagram of an electronic device in an implementation of the present disclosure. The electronic device 100 includes the battery in any one of the above implementations. The electronic device 100 having the battery has long operating time and long service life.

### Implementation 1

A method for preparing a silicon-based negative electrode material includes the following.

Place 1kg of silicon-oxygen material (SiO, whose median particle size (i.e., D₅₀) is 5µm) into a vapor deposition furnace, and under protection of argon atmosphere, raise a temperature to 950°C, introduce 1000sccm of ethylene, stop introduction of the ethylene after keeping the temperature for 5h, naturally reduce the temperature to room temperature under the argon atmosphere, and pulverize and screen powder to obtain a silicon-oxygen material coated with a carbon layer.

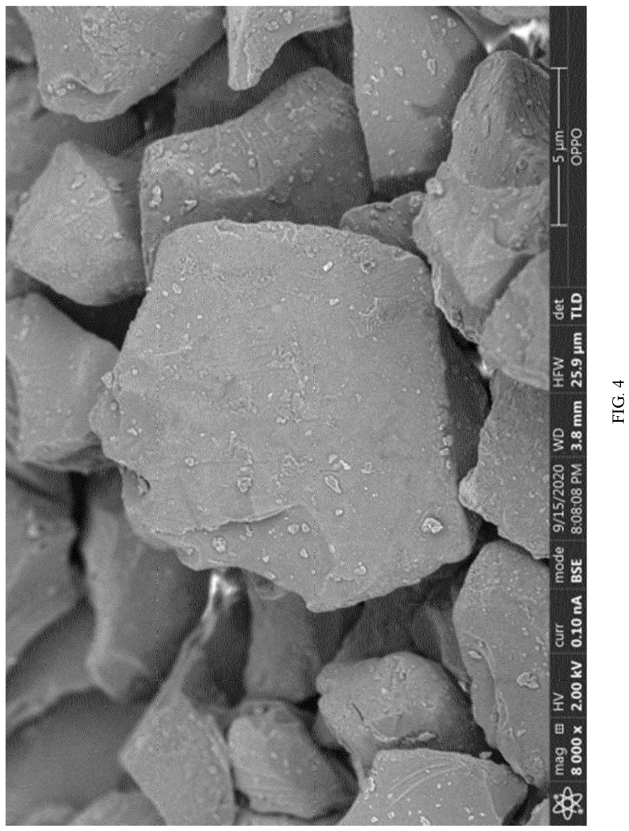

Dissolve 50g of 4-vinylphenylacetic acid in 800mL of N-methylpyrrolidone, add 950g of silicon-oxygen material coated with the carbon layer, stir and disperse evenly, and then heat to 120°C to completely volatilize organic solvent to obtain black powder. Then, dry the black powder at -0.09MPa and 120°C for 2h to obtain an initial product of the silicon-based negative electrode material. Finally, perform screening and iron removal on the initial product of the silicon-based negative electrode material to obtain a finished product of the silicon-based negative electrode material. Observe the silicon-based negative electrode material by using a scanning electron microscope (SEM) to obtain an electron micrograph of the silicon-based negative electrode material, where a scale bar is 5µm, and a result is illustrated in FIG. 4. It can be seen that the silicon-based negative electrode material has a complete structure and is completely coated.

### Implementation 2

A preparation method for a silicon-based negative electrode material includes the following.

Place 1kg of silicon-oxygen material (SiO, whose D₅₀ is 5µm) into the vapor deposition furnace, and under the protection of the argon atmosphere, raise the temperature to 950°C, introduce 2000sccm of ethylene, stop the introduction of the ethylene after keeping the temperature for 8h, naturally reduce the temperature to the room temperature under the argon atmosphere, and pulverize and screen powder to obtain the silicon-oxygen material coated with the carbon layer.

Dissolve 20g of 4-vinylphenylacetic acid in 800mL of N-methylpyrrolidone, add 980g of silicon-oxygen material coated with the carbon layer, stir and disperse evenly, and then heat to 120°C to completely volatilize the organic solvent to obtain the black powder. Then, dry the black powder at -0.09MPa and 120°C for 2h to obtain the initial product of the silicon-based negative electrode material. Finally, perform the screening and the iron removal on the initial product of the silicon-based negative electrode material to obtain the finished product of the silicon-based negative electrode material.

### Implementation 3

A preparation method for a silicon-based negative electrode material includes the following.

Place 1kg of silicon-oxygen material (SiO, whose D₅₀ is 5µm) into the vapor deposition furnace, and under the protection of the argon atmosphere, raise the temperature to 950°C, introduce 500sccm of ethylene, stop the introduction of the ethylene after keeping the temperature for 3h, naturally reduce the temperature to the room temperature under the argon atmosphere, and pulverize and screen powder to obtain the silicon-oxygen material coated with the carbon layer.

Dissolve 80g of 4-vinylphenylacetic acid in 800mL of N-methylpyrrolidone, add 920g of silicon-oxygen material coated with the carbon layer, stir and disperse evenly, and then heat to 120°C to completely volatilize the organic solvent to obtain the black powder. Then, dry the black powder at -0.09MPa and 120°C for 2h to obtain the initial product of the silicon-based negative electrode material. Finally, perform the screening and the iron removal on the initial product of the silicon-based negative electrode material to obtain the finished product of the silicon-based negative electrode material.

### Implementation 4

Implementation 4 is substantially the same as implementation 1, except that the silicon-oxygen material (SiO, whose D₅₀ of 5µm) is replaced by secondary particles of a nano silicon-carbon material, where a mass content of silicon is 40%, and D50 is 10µm.

### Implementation 5

Implementation 5 is substantially the same as implementation 1, except that a silicon-oxygen material having a D50 of 3µm is selected.

### Implementation 6

Implementation 6 is substantially the same as implementation 1, except that dissolving 4-vinylphenylacetic acid in N-methylpyrrolidone is replaced by dissolving 4-propenylbenzoic acid in dimethyl sulfoxide.

### Implementation 7

Implementation 7 is substantially the same as implementation 1, except that dissolving 4-vinylphenylacetic acid in N-methylpyrrolidone is replaced by dissolving 4-propenylbenzenesulfonic acid in dimethyl sulfoxide.

### Implementation 8

Implementation 8 is substantially the same as implementation 1, except that dissolving 4-vinylphenylacetic acid in N-methylpyrrolidone is replaced by dissolving 4-vinylphenylboronic acid in dimethyl sulfoxide.

### Implementation 9

Implementation 9 is substantially the same as implementation 1, except that dissolving 4-vinylphenylacetic acid in N-methylpyrrolidone is replaced by dissolving 4-vinylphenylphosphoric acid in dimethyl sulfoxide.

### Comparative example 1

Comparative example 1 is substantially the same as implementation 1, except that the phenyl-compound layer is not coated.

### Comparative example 2

Comparative example 2 is substantially the same as implementation 1, except that 4-vinylphenylacetic acid is replaced by a conductive polyaniline polymer.

### Comparative example 3

Comparative example 3 is substantially the same as implementation 1, except that 4-vinylphenylacetic acid is replaced by benzoic acid.

### Performance testing

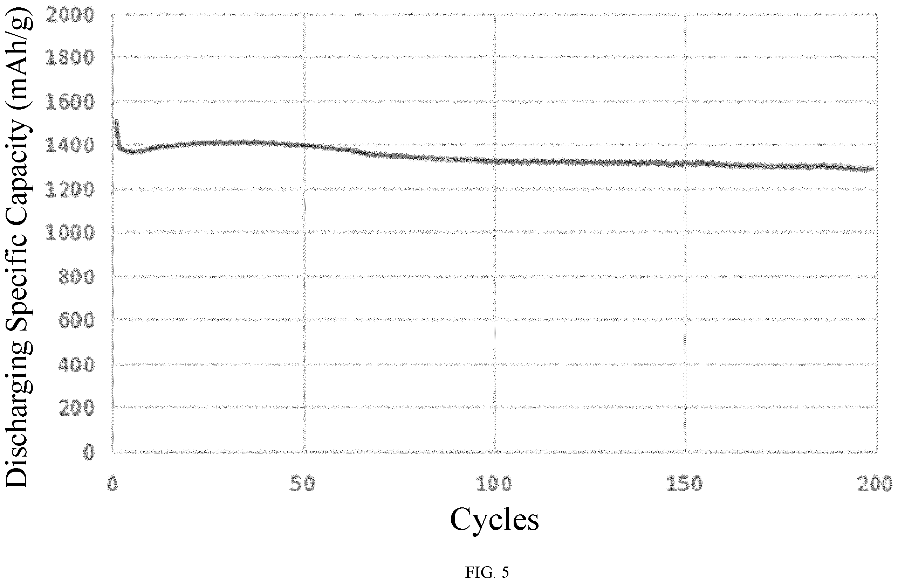

Mix the silicon-based negative electrode material prepared in implementation 1 with superconducting carbon black and adhesive (polyacrylic acid) at a mass ratio of 8: 1:1 and stir mixture for 1 h, then coat a slurry on a copper foil with a thickness of 8µm to prepare a silicon negative electrode sheet, and a lithium metal sheet is used as a counter electrode to prepare a half-cell for a cycle test. A cycle performance diagram of a half-cell prepared by the silicon-based negative electrode material of implementation 1 is illustrated in FIG. 5, where an initial discharging rate is 0.1C, an initial discharging specific capacity is 1502.3mAh/g, an initial coulombic efficiency is 81.5%; at 2nd cycle, the discharging rate is 0.2C, and the discharging specific capacity is 1385.1mAh/g; then cycle is performed at a rate of 0.2C, and at 100th cycle, the discharging specific capacity is 1322.8mAh/g, and a retention ratio is 95.5%; and at 200th cycle, the discharging specific capacity is 1290.9mAh/g, and the retention ratio is 93.2%.

Silicon-based negative electrode materials prepared in other implementations and comparative examples are prepared into half-cells by the same method as described above, the half-cells are tested under the same conditions, and results are illustrated in Table 1.

**Table 1 Test Results**

| | Initial reversible specific capacity of 0.2C (mAh/g) | Initial coulombic efficiency (%) | Capacity retention ratio at 100th cycle (%) | Capacity retention ratio at 200th cycle (%) |
|---|---|---|---|---|
| Implementation 1 | 1502.3 | 81.5 | 95.5 | 93.2 |
| Implementation 2 | 1480.1 | 79.1 | 93.1 | 91.7 |
| Implementation 3 | 1479.3 | 79.9 | 94.6 | 91.4 |
| Implementation 4 | 1409.2 | 88.3 | 90.7 | 86.6 |
| Implementation 5 | 1498.7 | 79.3 | 93.8 | 90.3 |
| Implementation 6 | 1485.5 | 80.7 | 94.1 | 92.7 |
| Implementation 7 | 1480.4 | 79.5 | 94.8 | 93 |
| Implementation 8 | 1497.4 | 80.9 | 94.5 | 92.5 |
| Implementation 9 | 1489.7 | 79.6 | 94.2 | 92.8 |
| Comparative example 1 | 1476.2 | 77.4 | 92.5 | 86.1 |
| Comparative example 2 | 1488.7 | 79.2 | 92.3 | 89.1 |
| Comparative example 3 | 1479.3 | 80.1 | 92.2 | 88.7 |

It can be seen from Table 1 that the initial coulombic efficiency corresponding to each implementation is higher than the initial coulombic efficiency corresponding to comparative example 1, and the 200th-cycle capacity retention ratio corresponding to each implementation is higher than the 200th-cycle capacity retention ratio corresponding to comparative example 1. It can be seen from comparative example 2 that the polyaniline has a certain flexibility, but the polyaniline is directly coated, so during the charging and discharging of the silicon-based core, the volume expands, and a polyaniline layer only adapts to the silicon-based core before expansion, and cannot adapt to the silicon-based core after expansion, such that the polyaniline layer is ruptured during the volume expansion of the silicon-based core, which may also cause the SEI film to be ruptured, thereby causing the electrolyte and the lithium ions to be consumed again to form a new SEI film. Therefore, the initial coulombic efficiency is reduced. It can be seen from comparative example 3 that a benzoic acid layer is adopted to replace the phenyl-compound layer in an implementation of the present disclosure. The benzoic acid layer contains no carbon-carbon double bond or carbon-carbon triple bond, such that during lithium intercalation of the silicon-based core, no polymerization occurs, and a new macromolecule layer cannot be generated, thereby having a small protective effect on a process of volume expansion- and-contraction of the silicon-based core, and resulting in a poor battery performance. Therefore, in an implementation of the present disclosure, the silicon-based core coated by the carbon layer and the phenyl-compound layer can be applied to a battery, thereby effectively improving the cycle performance of the battery.

Content provided by implementations of the present disclosure has been introduced in detail in the above, and principles and implementations of the present disclosure are illustrated and explained herein. Above explanations are only for facilitating understanding of the methods and core ideas of the present disclosure. At the same time, according to the ideas of the present disclosure, changes in specific implementations and an application scope can be made by those ordinary skilled in this art. To sum up, content of this specification should not be construed as limitation of the present disclosure.

## Claims

1. A silicon-based negative electrode material, comprising a silicon-based core, a carbon layer coating the silicon-based core, and a phenyl-compound layer coating the carbon layer, wherein a phenyl compound in the phenyl-compound layer has a structural formula illustrated in formula (I): 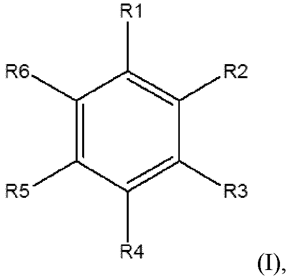 wherein R₁ has a carbon-carbon double bond or a carbon-carbon triple bond, and at least one of R₂, R₃, R₄, R₅, or R₆ has an organic acid group; or R₁ is an organic acid group having a carbon-carbon double bond or a carbon-carbon triple bond.

2. The silicon-based negative electrode material of claim 1, wherein a thickness of the phenyl-compound layer ranges from 5nm to 200nm.

3. The silicon-based negative electrode material of claim 1, wherein a weight of the phenyl-compound layer in the silicon-based negative electrode material accounts for 1 weight percent (wt%) -10wt%.

4. The silicon-based negative electrode material of claim 1, wherein a weight ratio of the phenyl-compound layer to the silicon-based core is (0.01-0.11):1.

5. The silicon-based negative electrode material of claim 1, wherein R₁ has the carbon-carbon double bond or the carbon-carbon triple bond, and R₄ has the organic acid group.

6. The silicon-based negative electrode material of claim 1, wherein the organic acid group is selected from a group consisting of a carboxylic acid group, a phosphoric acid group, a boronic acid group, and a sulfonic acid group.

7. The silicon-based negative electrode material of claim 6, wherein the phenyl compound is selected from a group consisting of 4-vinylphenylacetic acid, 4-propenylbenzoic acid, 4-propenylbenzenesulfonic acid, 4-vinylbenzeneboronic acid, and 4-vinylbenzenephosphonic acid.

8. The silicon-based negative electrode material of claim 1, wherein relative molecular mass of the phenyl compound is less than 1000.

9. The silicon-based negative electrode material of claim 1, wherein a median particle size of the silicon-based core ranges from 1µm to 10µm, and a weight of the silicon-based core in the silicon-based negative electrode material accounts for 80wt%-98 wt%.

10. The silicon-based negative electrode material of claim 1, wherein the silicon-based core is selected from a group consisting of an elemental-silicon material, a silicon-alloy material, a silicon-oxygen material, and a silicon-carbon material.

11. The silicon-based negative electrode material of claim 10, wherein the silicon-based core comprises a nanoscale elemental-silicon material, and the nanoscale elemental-silicon material is selected from a group consisting of a silicon nanosphere, a silicon nanotube, and a silicon nanowire.

12. The silicon-based negative electrode material of claim 10, wherein the silicon-carbon material is a silicon-carbon composite, and a mass content of silicon in the silicon-carbon composite is greater than 25%.

13. The silicon-based negative electrode material of claim 1, wherein a thickness of the carbon layer ranges from 5nm to 300nm, a weight of the carbon layer in the silicon-based negative electrode material accounts for 1wt%-10wt%, and a weight ratio of the carbon layer to the silicon-based core is (0.01-0.125):1.

14. The silicon-based negative electrode material of claim 1, wherein the material of the carbon layer comprises at least one of graphene, cracked carbon, a carbon nanotube, a carbon nanofiber, graphite, carbon black, or amorphous carbon.

15. A method for preparing a silicon-based negative electrode material, comprising:
forming a carbon layer on a surface of a silicon-based core; and
obtaining the silicon-based negative electrode material by forming a phenyl-compound layer on a surface of the carbon layer, wherein the silicon-based negative electrode material comprises the silicon-based core, the carbon layer coating the silicon-based core, and the phenyl-compound layer coating the carbon layer, and a phenyl compound in the phenyl-compound layer has a structural formula illustrated in formula (I): 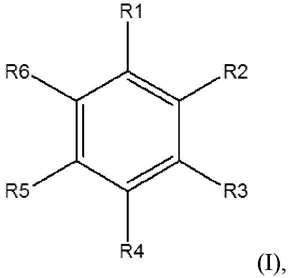
wherein R₁ has a carbon-carbon double bond or a carbon-carbon triple bond, and at least one of R₂, R₃, R₄, R₅, or R₆ has an organic acid group; or R₁ is an organic acid group having a carbon-carbon double bond or a carbon-carbon triple bond.

16. The method of claim 15, wherein forming the carbon layer on the surface of the silicon-based core comprises: forming the carbon layer on the surface of the silicon-based core by solid-phase coating, liquid-phase coating, or vapor-phase coating.

17. The method of claim 15, wherein forming the phenyl-compound layer on the surface of the carbon layer comprises:
mixing the silicon-based core having the carbon layer with solution containing the phenyl compound, and forming the phenyl-compound layer on the surface of the carbon layer after filtering and drying.

18. A negative electrode, comprising a negative-electrode current collector, and a negative-electrode material layer disposed on the negative-electrode current collector, wherein the negative-electrode material layer comprises the silicon-based negative electrode material of any one of claims 1 to 14 or the silicon-based negative electrode material prepared by the method of any one of claims 15 to 17.

19. A battery, comprising a positive electrode, the negative electrode of claim 18, and electrolyte.

20. An electronic device, comprising the battery of claim 19.
